# EUROPÄISCHE PATENTSCHRIFT

(11) **EP 0 951 084 B1**
(45) Veröffentlichungstag und Bekanntmachung des Hinweises auf die Patenterteilung: **05.03.2003**
(21) Anmeldenummer: 99106847.9
(22) Anmeldetag: 07.04.1999
(51) Int. Cl.: H01M 4/90, H01M 8/10

(54) **Brennstoffzellenanode für die Oxidation von Methanol**
Fuel cell anode for the oxidation of methanol
Anode de pile à combustible pour l'oxydation de méthanol

(30) Priorität: 15.04.1998 DE 19816622
(43) Veröffentlichungstag der Anmeldung: 20.10.1999
(73) Patentinhaber: OMG AG & Co. KG, 63457 Hanau (DE)
(72) Erfinder: Wendt, Hartmut Prof., 64807 Dieburg (DE); Götz, Michael, 64283 Darmstadt (DE)
(74) Vertreter: Stellbrink, Axel

(56) Entgegenhaltungen:
- WO-A-97/21256
- US-A- 5 683 829
- SARANGAPANI SH ET AL: "MACROCYCLIC REDOX PROMOTERS FOR DIRECT METHANOL FUEL CELLS-PART II" EXTENDED ABSTRACTS,US,ELECTROCHEMICAL SOCIETY. PRINCETON, NEW JERSEY SPRING MEETING RENO, NEVADA MAY 21-26 1995, Bd. 95/1, 1995, Seiten 733-734, XP000551390 ISSN: 0160-4619
- BETT J S ET AL: "Platinum-macrocycle co-catalysts for the electrochemical oxidation of methanol" ELECTROCHIMICA ACTA,GB,ELSEVIER SCIENCE PUBLISHERS, BARKING, Bd. 43, Nr. 24, 21. August 1998 (1998-08-21), Seiten 3645-3655, XP004132403 ISSN: 0013-4686
- TADEUSZ M ET AL: "Characterization of Conductive Polymeric Nickel(II) Tetrakis(3-methoxy-4-hydroxy-phenyl)Porphy rin as an Anodic Material for Electrocatalysisa" JOURNAL OF THE ELECTROCHEMICAL SOCIETY, Bd. 138, Nr. 7, Juli 1991 (1991-07), Seiten 2008-2015, XP002138560 MANCHESTER, NEW HAMPSHIRE US

## Beschreibung

Die Erfindung betrifft eine Brennstoffzellenanode für die Oxidation von Methanol, welche als primäre, katalytisch aktive Komponente wenigstens ein Platinmetall oder Legierungen von Platinmetallen enthält.

Die direkte anodische Methanoloxidation, die für die Verwendung von Membranbrennstoffzellen als Kraftquelle für den Antrieb von Automobilen besonders wichtig ist, erfordert unwirtschaftlich hohe Edelmetallbeladungen der Anoden, selbst wenn die direkte Methanolzelle bei stark erhöhter Temperatur - nämlich 130°C - betrieben wird [W. Preidel, K. Mund, K. Pantel, G. Starbeck, G. Luft, M. Waidhas, VDI-Berichte 1174 211 (1995)]. Stand der Technik ist die Verwendung eines Legierungskatalysators auf einem Rußträger, der Platin und Ruthenium als Cokatalysator im molaren Verhältnis von 1:1 enthält [H.-F. Oetjen, V. Schmidt, U. Stimming, F. Trila, J Electrochem. Soc. **143**, 3 83 8 (1996)].

Der Platinanteil auf der Oberfläche der nanodispers auf dem Ruß verteilten Legierungskristallite sorgt dabei wesentlich für die chemisorptiv bedingte Spaltung der C-H- Bindung des Methanolmoleküls, dessen oxidativer Abbau schließlich zur Bildung von Kohlenmonoxid oder einer Spezies, die mit Kohlenmonoxid nahe verwandt ist, führt und durch starke adsorptive Bindung an das Platin dieses vergiftet [S. Wilhelm, T. Iwasita, W. Vielstich, J. Electroanal. Chem. **238**, 383-391 (1987)].

Ruthenium, bildet bedeutend leichter als Platin (bei rund +500 mV gegen eine reversible Wasserstoffelektrode (RHE = Reversible Hydrogen Electrode), verglichen mit +800 mV gegen RHE bei Platin) Oberflächenoxide durch anodische Oxidation und vermag den Sauerstoff des Oberflächenoxids auf das auf der Katalysatoroberfläche leicht bewegliche Kohlenmonoxid zu übertragen [K. A. Friedrich, K.-P. Geyzers, U. Linke, U. Stimming, J. Stumper, J Electroanal. Chem. 402,123-128 (1996)]. Dieses wird so zu nur sehr schwach adsorbiertem Kohlendioxid oxidiert und dadurch wird die durch CO-Adsorption bedingte Vergiftung des Katalysators zum Teil aufgehoben.

Nachteilig bei der Verwendung von Ruthenium als Cokatalysator ist die Tatsache, daß es bei einer Temperatur von 80 bis 100°C - dem üblichen Bereich der Betriebstemperatur drucklos betriebener Membranbrennstoffzellen-wegen des immer noch relativ zu hohen Gleichgewichtspotentials der Rutheniumoxidbildung nicht möglich ist, das Leerlaufpotential der Methanolanode dem Gleichgewichtspotential der Methanoloxidation auf weniger als +300 mV anzunähern, weshalb der Zellenbetrieb durch eine zu hohe Verlustleistung unwirtschaftlich zu werden droht. Darüber hinaus ist die Verwendung eines zweiten Edelmetalls aus der Gruppe der Platinmetalle als Cokatalysator wegen des erforderlichen hohen stöchiometrischen Verhältnisses für den Gebrauch in Brennstoffzellen zu teuer.

Es ist seit langem durch Grundlagenuntersuchungen z.B. von Sandstede [G. Sandstede ed., From Electrocatalysis tofuel cells, University of Washington Press, Seattle, London, 1971] und neuerlich Tseung [P.K. Shen, A.C.C. Tseung, J Electrochem. Soc. **141**, 3082 (1994)] bekannt, daß auch Nicht-Platinmetalle als Cokatalysatoren für die durch Platin katalysierte anodische Methanoloxidation in Frage kommen. Diese Befunde konnten auch für Katalysatoren auf Ruß- oder Aktivkohleträgern in Membranbrennstoffzellen nachgewiesen werden [M. Götz, H. Wendt, in Gesellschaft Deutscher Chemiker Monographie Bd. 10, H-rsg. F.J.Kruger, Erscheint 1998]. Es zeigt sich jedoch, daß ein cokatalytischer Effekt, der vergleichbar mit dem des Rutheniums ist, selbst mit den cokatalytisch wirksamsten Elementen insbesondere Wolfram und Molybdän für Methanol und Zinn für die anodische CO-Oxidation, nicht erreicht werden kann.

Die US 5,683,829 offenbart eine Brennstoffzellenanode für die Oxidation von Methanol. Diese Anode enthält Platin als katalytisch aktive Komponente und als Cokatalysator einen metallorganischen Komplex, unter anderen auch Phthalocyaninkomplexe der Metalle Ru, Sn, Ir, Os, Mo, Mn, Rh, Pt, Co oder Fe. Die Verwendung des Cokatalysators führt zu höheren Stromdichten in einer Direkt-Methanol-Brennstoffzelle.

Aufgabe der vorliegenden Erfindung ist es, eine Brennstoffzellenanode unter Verwendung eines Cokatalysator für die elektrokatalytische Methanoloxidation in sauren Elektrolyten - insbesondere in sauren Ionomerelektrolyten wie Nation® - anzugeben, die vergleichbare oder bessere Leistungsdaten wie eine Brennstoffzellenanode gemäß US 5,683,829 erzielt und gegenüber einer Vergiftung des Platins resistent ist.

Diese Aufgabe wird durch eine Brennstoffzellenanode für die Oxidation von Methanol gelöst, welche als primäre, katalytisch aktive Komponente wenigstens ein Platinmetall oder Legierungen von Platinmetallen sowie als Cokatalysator zusätzlich Übergangsmetallkomplexe des Phthalocyanins oder der substituierten Phthalocyanine enthält, die die katalytische Wirkung für die anodische Methanoloxidation verstärken. Die Brennstoffzellenanode ist dadurch gekennzeichnet, daß die Übergangsmetallkomplexe des Phthalocyanins oder der substituierten Phthalocyanine unter einer Stickstoffatmosphäre schonend pyrolysiert wurden.

Als Platinmetalle sind Platin, Ruthenium oder Palladium besonders geeignet. Sie können allein oder in binären oder ternären Kombinationen und/oder als Legierungen vorliegen.

Als bevorzugte Übergangsmetalle werden Nickel, Eisen und Kobalt verwendet. In einer besonderen Ausführungsform der Erfindung liegen diese Übergangsmetalle als Phthalocyaninkomplexe oder als Komplexe der Phthalocyanintetrasulfonsäure vor.

Die erfindungsgemäß zu verwendenden Übergangsmetallkomplexe führen zu einem deutlichen cokatalytischen Effekt bei der direkten anodischen Methanoloxidation, der gegenüber der US 5,683,829 gesteigert ist, wenn der cokatalytisch wirksame Übergangsmetallkomplex im adsorbierten Zustand auf Ruß oder Aktivkohle einer schonenden Pyrolyse in einer Stickstoffatmosphäre bei 700°C unterworfen wird.

Die erfindungsgemäß für die Brennstoff zellenanode zu verwendenden Platinmetalle und Cokatalysatoren werden als Trägerkatalysatoren auf einem hochoberflächigen, leitfähigen Trägermaterial wie Ruß oder Aktivkohle eingesetzt. Die Herstellung derartiger auf Ruß oder Aktivkohle geträgerter Katalysator/Cokatalysatorsysteme ist nach einem relativ einfachen, auf der Adsorption geeigneter Übergangsmetall-Phthalocyaninkomplexe auf Ruß oder Aktivkohle beruhenden Verfahren möglich, welches einen geringen apparativen Aufwand mit dem Vorteil verbindet, daß als Ausgangsmaterial ein nach gängigen Verfahren hergestellter nanodispers auf Ruß oder Aktivkohle aufgezogener Platinkatalysator sein kann. Die Kristallitgrößen der Platinmetalle auf dem Trägermaterial liegen im Bereich zwischen 1 und 5 nm.

Bevorzugt liegt das stöchiometrische Verhältnis des Übergangsmetall-Phthalocyaninkomplexes zu den Platinmetallen zwischen 0,25:1 bis 1:3.

Die folgenden Beispiele veranschaulichen die erfindungsgemäße Herstellung und Wirkungsweise von Pyrolysaten der Übergangsmetall-Porphyrinkomplexe als Cokatalysatoren für die anodische Methanoloxidation. Es zeigen
- Abbildung 1:: Strom/Spannungskurven der Brennstoffzelle von Vergleichsbeispiel 1 bei Versorgung der Anode mit befeuchtetem Wasserstoff (H₂) und mit einer Mischung aus Wasserdampf und Methanol (MeOH)
- Abbildung 2:: Strom/Spannungskurven der Brennstoffzelle von Vergleichsbeispiel 2 bei Versorgung der Anode mit befeuchtetem Wasserstoff (H₂) und mit einer Mischung aus Wasserdampf und Methanol (MeOH)
- Abbildung 3:: Strom/Spannungskurven der Brennstoffzellen von Vergleichsbeispiel 1 (Pt), Vergleichsbeispiel 2 (PtRu), Vergleichsbeispiel 3 (Pt/NiPCTSA) und von Beispiel 1 (Pt/NiPCTSA get.)
- Abbildung 4:: Strom/Spannungskurven von Brennstoffzellen mit Platin/Palladium-Legierungskatalysatoren gemäß dem Stand der Technik (Pt/Pd) und gemäß der Erfindung (Pt/Pd/NiPCTSA)

### Vergleichsbeispiel 1:

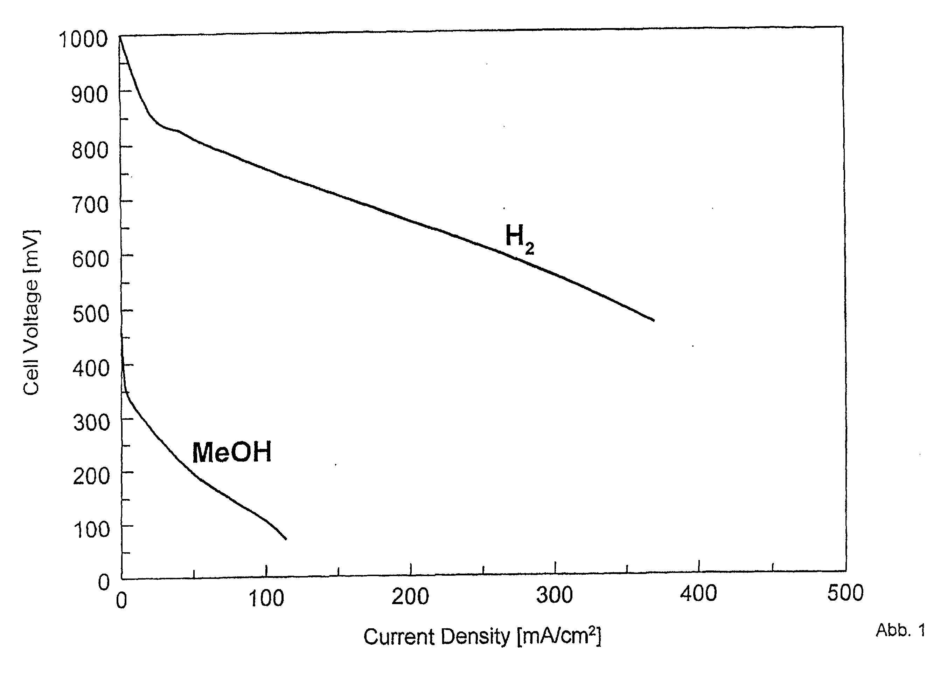

Gemäß DE 196 115 90 wird eine Tinte, die käuflichen, auf Ruß geträgerten Platinkatalysator (20 Gew.-% Platinbeladung), Glycerin, Wasser sowie das Tetrabutylammoniumsalz von Nafion gelöst in Isobutanol enthält, auf eine Nafionmembran Typ 115 beidseitig aufgesprüht, so daß die Platinbeladung der Membran-Elektrode-Einheit (MEE) auf beiden Seiten jeweils 0,4 mg/cm² beträgt. Die aufgesprühten Elektroden werden durch Kochen in 10 Gew.-% Schwefelsäure formiert, durch Spülen von Schwefelsäure befreit und in eine Laborbrennstoffzelle mit einer aktiven Oberfläche von 5x5 cm² eingebaut. Die Kathode wird mit Sauerstoff und die Anode entweder mit befeuchtetem Wasserstoff (zum Vergleich) oder einer Mischung aus Wasserdampf und Methanol (50:1 mol:mol) versorgt. Die Stromspannungskurven der Zellen wurden bei 95°C gemessen. (Kurven Abb. 1).

### Vergleichsbeispiel 2:

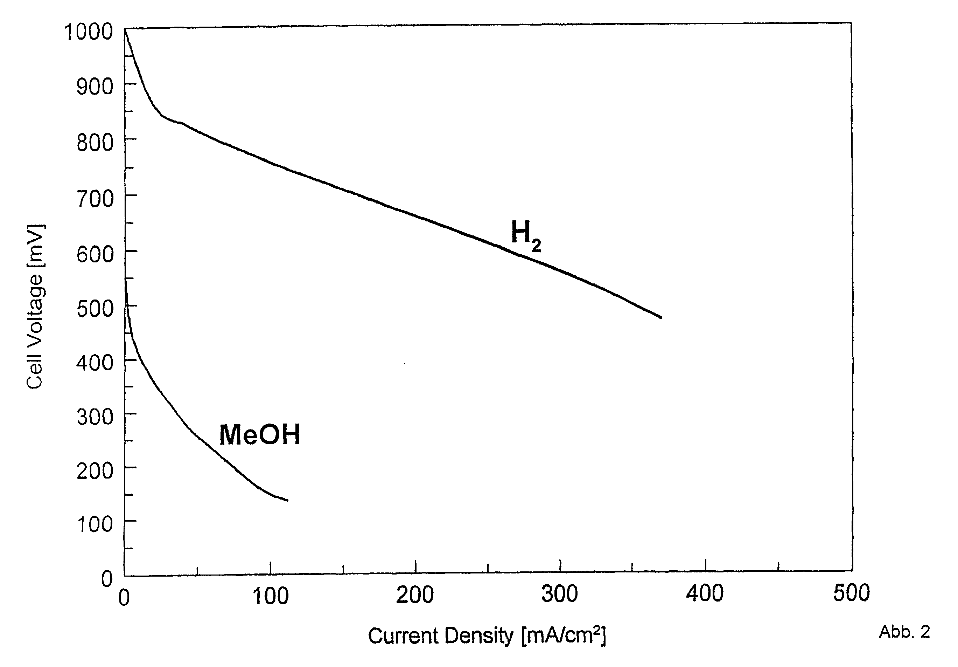

Nach dem angegebenen Verfahren werden MEE mit Anoden aus kommerziell erhältlichem Ruß hergestellt, der mit 20 Gew.-% nanodispersem Pt/Ru (1: l mol:mol) aktiviert ist. Die Kathode ist wie im ersten Beispiel aus Pt-aktiviertem Ruß (20 Gew.-%) hergestellt. Die Edelmetallbeladung beträgt auf beiden Seiten der MEE 0,4 mg/cm² Edelmetall (d.h. Pt bzw. Pt + Ru). Die Stromspannungskurven der Zelle für Wasserstoff bzw. Wasserdampf/Methanol-Betrieb sind in Abbildung 2 dargestellt. Man stellt eine deutliche Verbesserung, das heißt eine Erhöhung der Leistungsdichte für den Pt/Ru-Katalysator, verglichen mit Pt alleine im Methanolbetrieb fest.

### Vergleichsbeispiel 3:

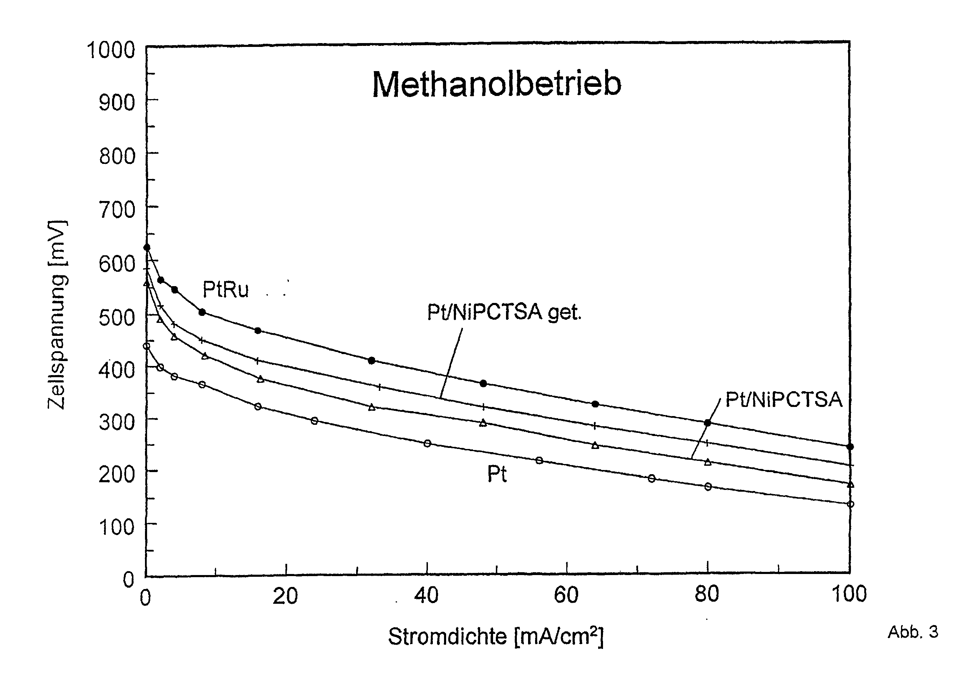

Kommerziell erhältlicher Pt-Katalysator (20 Gew.-% auf Ruß), wie er im Vergleichsbeispiel 1 verwendet wurde, wird mit Nickelphthalocyanintetrasulfonat-Komplex im stöchiometrischen Verhältnis Pt:Komplex 4:1 mol/mol durch Adsorption aus einer wäßrigen Lösung des Komplexes dotiert. Das Lösungsmittel kann vom Katalysator entweder durch Destillation oder durch Abfiltrieren bzw. Zentrifugieren getrennt werden. Die Herstellung der MEE vollzieht sich wie oben beschrieben. Die anodenseitige Platinbeladung beträgt 0,4 mg/cm² und 0,5 mg/cm² Komplex. In Abbildung 3 sind die Strom/Spannungskurven der Brennstoffzellen dieses und der vorangegangenen Beispiele im Methanolbetrieb miteinander verglichen. Die Leistungsdichten, die mit Platin und dem Komplex erzielt werden, sind deutlich höher als die der allein durch Platin aktivierten Anoden. Allerdings werden die Stromdichten, die mit Pt/Ru-Anoden erzielt werden, nicht erreicht.

### Beispiel 1:

Der oben beschriebene Mischkatalysator, der Platin und Nickelphthalocyanintetrasulfonat-Komplex im molaren Verhältnis von 4:1 enthält, wurde unter Stickstoffatmosphäre für 1 Stunde bei 700°C gehalten. Dadurch erzielt man eine pyrolytische Zersetzung des Komplexes. Aus dem derart behandelten Katalysator werden MEE-Anoden mit einer Platinbeladung von 0,4 mg/cm² hergestellt. Die Strom/Spannungskurve einer anodenseitig mit Wasserdampf/Methanol beaufschlagten Zelle, zeigt nochmals eine Erhöhung der Stromdichte und liegt in einem vergleichbaren Bereich wie die Stromspannungskurve des Pt/Ru (1:1) Katalysators (siehe Abbildung 3).

### Beispiel 2:

Platin/Palladium-Mischkatalysatoren werden für die anodische Wasserstoffoxidation bei bis zu 1% Kohlenmonoxidgehalt des Wasserstoffs in phosphorsauren Brennstoffzellen bei 200°C verwendet. (P: Stoneheart, Ber. Bunsenges. Physikal. Chem. **94** (1990), 913)

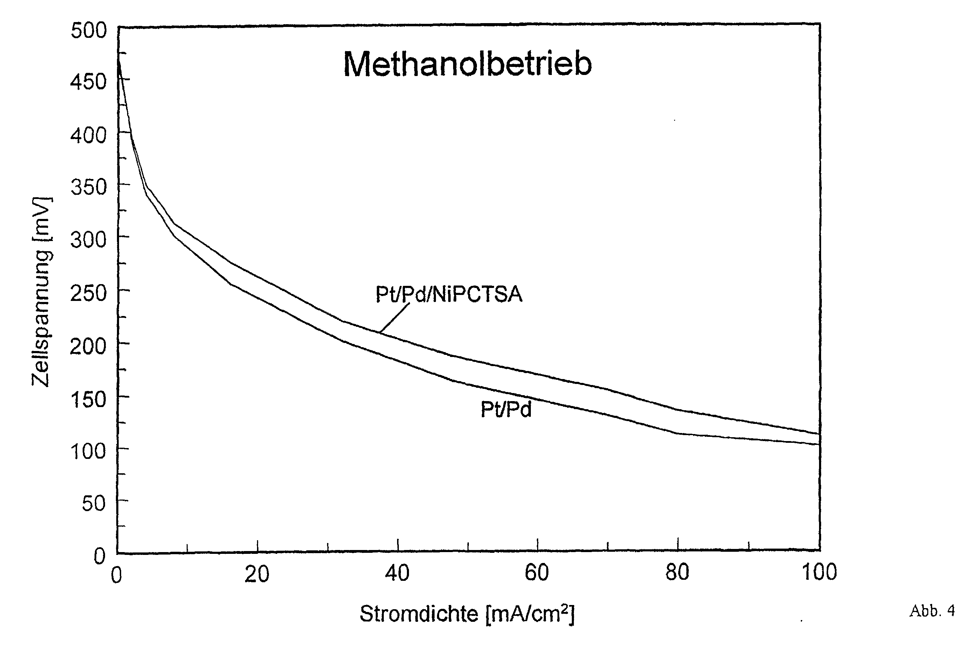

Wie ein Vergleich der Abbildungen 1 und 4 zeigt, katalysiert der Pt/Pd-Legierungskatalysator bei gleicher Gesamtbeladung von 0,4 mg/cm² die anodische Methanoloxidation weniger gut als Platin. Aber auch in diesem Fall fördert der Zusatz von Nickel-Phthalocyanin im molaren Verhältnis von Komplex:Edelmetall - 1:4 die anodische Methanoloxidation. Eine Pyrolyse des Komplexes bei 700°C erweist sich auch hier als förderlich.

## Patentansprüche

1. Brennstoffzellenanode für die Oxidation von Methanol, welche als primäre, katalytisch aktive Komponente wenigstens ein Platinmetall oder Legierungen von Platinmetallen sowie als Cokatalysator zusätzlich Übergangsmetallkomplexe des Phthalocyanins oder der substituierten Phthalocyanine enthält, die die katalytische Wirkung für die anodische Methanoloxidation verstärken,
**dadurch gekennzeichnet,**
**daß** die Übergangsmetallkomplexe des Phthalocyanins oder der substituierten Phthalocyanine unter einer Stickstoffatmosphäre schonend pyrolysiert wurden.

2. Brennstoffzellenanode nach Anspruch 1,
**dadurch gekennzeichnet,**
**daß** es sich bei den Übergangsmetallkomplexen um Phthalocyaninkomplexe des Nickels und/oder Kobalts oder um Nickel- und/oder Kobaltkomplexe der Phthalocyanintetrasulfonsäure handelt.

3. Brennstoffzellenanode, nach einem der Ansprüche 1 - 2,
**dadurch gekennzeichnet,**
**daß** wenigstens eines der Platinmetalle Platin, Ruthenium und Palladium als primäre, katalytisch aktive Komponente verwendet wird.

4. Brennstoffzellenanode, nach einem der Ansprüche 1 - 2,
**dadurch gekennzeichnet,**
**daß** es sich bei der primären, katalytisch aktiven Komponente um binäre oder ternäre Kombinationen und Legierungen der Metalle Platin, Palladium und Ruthenium handelt.

5. Brennstoffzellenanode, nach einem der Ansprüche 1 - 4,
**dadurch gekennzeichnet,**
**daß** primäre, katalytisch aktive Komponente und Cokatalysatoren auf einem hochoberf lächigen, leitfähigen Trägermaterial nanodispers mit mittleren Kristallitgrößen im Bereich von 1 bis 5 nm vorliegen.

6. Brennstoffzellenanode nach einem der Ansprüche 1 - 5,
**dadurch gekennzeichnet,**
**daß** der Übergangsmetall-Phthalocyaninkomplex zum Platinmetall oder zu den Platinmetallen im stöchiometrischen Verhältnis zwischen 0,25:1 bis 1:3 vorliegt.

## Claims

1. A fuel cell anode for the oxidation of methanol which contains, as primary catalytically active component, at least one platinum metal or alloys of platinum metals and in addition, as cocatalyst, transition metal complexes of phthalocyanine or of a substituted phthalocyanine which amplify the catalytic effect for anodic methanol oxidation,
**characterised in that**
the transition metal complexes of phthalocyanine or of a substituted phthalocyanine have been gently pyrolysed under an atmosphere of nitrogen.

2. A fuel cell anode according to claim 1,
**characterised in that**
the transition metal complexes are phthalocyanine complexes of nickel and/or cobalt or nickel and/or cobalt complexes of phthalocyanine tetrasulfonic acid.

3. A fuel cell anode according to one of claims 1 - 2,
**characterised in that**
at least one of the platinum metals platinum, ruthenium and palladium is used as a primary catalytically active component.

4. A fuel cell anode according to one of claims 1 - 2,
**characterised in that**
the primary catalytically active component consists of binary or ternary combinations and alloys of the metals platinum, palladium and ruthenium.

5. A fuel cell anode according to one of claims 1 - 4,
**characterised in that**
the primary catalytically active component and cocatalysts are present on a high-surface area conductive support material in nanodisperse form with average crystallite sizes in the range from 1 to 5 nm.

6. A fuel cell anode according to one of claims 1 - 5,
**characterised in that**
the transition metal phthalocyanine complex and platinum metal or platinum metals are present in a stoichiometric ratio between 0.25:1 and 1:3.

## Revendications

1. Anode de pile à combustible pour l'oxydation du méthanol, comportant comme composant primaire actif à activité catalytique, au moins un métal du groupe du platine ou des alliages d'un métal du groupe du platine ainsi que comme cocatalyseurs, des complexes de métaux de transition de la phtalocyanine ou de la phtalocyanine substituée, qui amplifient l'effet catalytique pour l'oxydation anodique du méthanol,
**caractérisée en ce que**
les complexes de métaux de transition de la phtalocyanine ou de la phtalocyanine substituée sont pyrolisés avec ménagement sous une atmosphère d'azote.

2. Anode de pile à combustible selon la revendication 1,
**caractérisée en ce que**
les complexes de métaux de transition sont des complexes de phtalocyanine du nickel et/ou du cobalt, ou des complexes de nickel et/ou de cobalt de l'acide phtalocyaninetétrasulfonique.

3. Anode de pile à combustible selon l'une quelconque des revendications 1 et 2,
**caractérisée en ce qu'**
au moins l'un des métaux du groupe du platine, le platine, le ruthénium et le palladium est utilisé comme composant primaire à activité catalytique.

4. Anode de pile à combustible selon l'une quelconque des revendications 1 et 2,
**caractérisée en ce que**
le composant primaire à activité catalytique est constitué de combinaisons binaires ou ternaires ou d'alliages des métaux platine, palladium et ruthénium.

5. Anode de pile à combustible selon l'une quelconque des revendications 1 à 4,
**caractérisée en ce que**
le composant primaire à activité catalytique et les cocatalyseurs sont présents sur un matériau de support conducteur offrant une très grande surface superficielle, sous la forme de grains de cristaux moyens de l'ordre de 1 à 5 nm.

6. Anode de pile à combustible selon l'une quelconque des revendications 1 à 5,
**caractérisée en ce que**
le complexe métal transitoire-phtalocyanine par rapport au métal de type platine ou des métaux de type platine est présent selon un rapport stoechiométrique compris entre 0,25/1 et 1/3.
